# EUROPEAN PATENT SPECIFICATION

(11) **EP 4 399 233 B1**
(45) Date of publication and mention of the grant of the patent: **09.07.2025**
(21) Application number: 22783443.9
(22) Date of filing: 09.09.2022
(51) Int. Cl.: C08F 297/04, C08L 53/02, C08L 25/06, C08J 5/18

(54) **ORGANOLEPTICALLY IMPROVED, LOW FILM-BLOCKING STYRENE BUTADIENE BLOCK COPOLYMERS**
ORGANOLEPTISCH VERBESSERTE, FILMARME STYROL-BUTADIEN-BLOCKCOPOLYMERE
COPOLYMÈRES SÉQUENCÉS DE STYRÈNE-BUTADIÈNE À BLOCAGE DE FILM FAIBLE, AMÉLIORÉS DU POINT DE VUE ORGANOLEPTIQUE

(30) Priority: 10.09.2021 EP 21195878
(43) Date of publication of application: 17.07.2024
(73) Proprietor: INEOS Styrolution Group GmbH, 60325 Frankfurt (DE)
(72) Inventor: NIESSNER, Norbert, 67159 Friedelsheim (DE); VERSWYVEL, Michiel, 2800 Mechelen (BE)
(74) Representative: Jacobi, Markus Alexander
(86) International application number: PCT/EP2022/075082
(87) International publication number: WO 2023/036918

(56) References cited:
- EP-A1- 2 371 900
- EP-A1- 2 415 836
- EP-A1- 2 450 396
- WO-A1-2018/153808
- WO-A1-2020/203371

## Description

The invention relates to styrene butadiene block-copolymers (SBC), polymer compositions comprising said SBC, and the use of said polymer compositions for the production of films.

Stiff and tough styrene-butadiene block copolymers (SBCs) and compositions comprising SBC are known. For the production of shrink films, often mixtures of a tough SBC component and a stiff SBC component, optionally together with general purpose polystyrene (GPPS), are blended and extruded to a film. In a next online step, the film is heated by hot air and stretched orthogonal (transverse) on the extrusion direction (transverse machine direction orientation or TDO) by a factor 4 to 6 and eventually also stretched perpendicular (parallel) to machine direction (machine direction orientation or MDO) by factor up to 1.1. Finally, the edges are cut and the films are wrapped on big rolls. Later, the films can be cut into smaller rolls, printed, and sealed to a long cylindrical hose. Finally, the printed hose is cut into the dimensions of cylindrical labels and shrinked around a container (e.g. a bottle) by applying heat, typically in a heat tunnel. In another process, the film is stretched in MDO direction by factor 2 to 5 and eventually also stetched in TDO by factor up to 1.1. After cutting the film edges and wrapping the film on big rolls, the films are cut into smaller rolls and printed. The label is wrapped around a container, cut, glued and shrinked around a container by application of heat.

US 2011/098401 describes mixtures of styrene-butadiene block copolymers A and B for the production of heat-shrinkable films with high shrinkage capability and high stiffness/strength. Preferably SBC copolymer A has the structure S-(B/S)_{A}-S or, preferred, is a single copolymer block (B/S)_{A} wherein (B/S)_{A} is a random vinylaromatic/diene copolymer hard block (diene 5 to 35 wt.-%, Mn 15,0000 to 300,000 g/mol) and S is a vinylaromatic polymer hard block. Preferably the SBC block copolymers B are star shaped having short branches Sₑ-(B/S)_{B}~ and long branches (B/S)_{A}-Sᵢ-(B/S)_{B}-Sₛ∼ where (B/S)_{B} is a soft random copolymer block (diene 80 to 40 wt.-%), Sₑ, Sᵢ are long and Sₛ is a short vinylaromatic polymer block.

WO 2018/114569 and WO 2018/153808 describe SBC mixtures for shrink wrap films comprising a stiff star-shaped block copolymer A or A1 having two short branches of a single copolymer block (B/S)_{Ai} (Mn 5,000 to 15,000 g/mol) and two long branches of the structure Sₜ-[(B/S)_{A}]ₙ-(B/S)_{Ai} or [(B/S)_{A}]ₙ-(B/S)_{Ai} wherein Mn of block [(B/S)_{A}]ₙ is 50,000 to 150,000 g/mol and Mn of block Sₜ is 3,000 to 8,000 g/mol.

Further comprised is a tough star shaped block copolymer B or A2 which preferably has three or two short branches of structure Sₑ-(B/S)_{B}~ or Sₑ-(B/S)_{B}-Sₛ~ and one or two long branch(es) of structure (B/S)_{Ae}-Sᵢ-(B/S)_{B-} or (B/S)_{Ae}-S-(B/S)_{B}-S_{S}∼; where Mn of block (B/S)_{B} is 5,000 to 40,000 g/mol, Mn of block (B/S)_{Ae} is 30,000 to 100,000 g/mol, Mn of block Sₑ and Sᵢ is 5,000 to 30,000 g/mol and Mn of block Sₛ is < 2,500 g/mol.

The diene content of (random) hard blocks (B/S)_{A} of SBCs A, A1, B and A2 is 35 to 5 wt.-%; the diene content of soft blocks (B/S)_{B} of SBC B is 80 to 40 wt.-% and of SBC A2 is 100 to 75 wt.-%, respectively.

The films made of said prior art SBC blends are made out of a soft phase and a hard phase wherein the soft has a cylindrical morphology.

US 2005/009990 discloses mixtures comprising linear block copolymers made from vinylaromatic monomers and from dienes of the structure (I) S1-B1-S2 and (II) S3-B2-S4, where S1 is a block made from vinylaromatic monomers with number-average molar mass Mn in the range from 40,000 to 100,000 g/mol, each of S2, S3 and S4 is a block made from vinylaromatic monomers with number-average molar mass Mn in the range from 5,000 to 20,000 g/mol, each of B1 and B2 is a block made from dienes or a copolymer block made from dienes and from vinylaromatic monomers with number-average molar mass Mn in the range from 15,000 to 40,000 g/mol, and the ratio of the block copolymers (I)/(II) is in the range from 0.6 to 2. The transitions between the blocks are sharp. The Examples show simultaneously prepared mixtures of SBC (I) (Mn ≈ 97,000 to 100,000 g/mol) and SBCs (II) (Mn ≈ 45,000 to 49,000 g/mol) which mixtures have a butadiene content in the range of 21.6 to 35 wt.%. Blends of said mixtures with GPPS have high toughness together with high stiffness and can be used for the production of thin films.

EP 2 450 396 teaches a composition for a stretchable film, which achieves a high-level balance between a high elastic modulus and a small permanent elongation. EP 2 415 836 and EP 2 371 900 disclose block copolymer compositions for a stretchable film, which achieves a high-level balance between a high elastic modulus and a small permanent set.

Films produced from the SBC polymers or polymer compositions according to the prior art often have the tendency to stick when wrapped onto rolls during the production process. This blocking of the stretched film can cause various technical problems. In some cases, it is even impossible to unwind the roll after several days. Prior art films often suffer unwanted stretching and eventually ripping during processing.

Moreover, prior art materials often have an unpleasant odor. Thus, the blocking of the films and the organoleptic properties of said materials are still in need of improvement.

One object of the invention is to provide a material based on styrene butadiene block-copolymers (SBC) which allows extrusion of blown and cast films with high melt strength, which is suitable for the production of shrink films with good mechanical properties and with reduced layer-to-layer stickiness. Moreover, the organoleptic properties of the material shall be improved.

The problem is solved by the block copolymer and polymer composition according to the claims.

One aspect of the invention is a linear block copolymer (A) comprising (or consisting of) at least two polymer blocks S of different number average molecular weight Mn consisting of 85 to 100% by weight of at least one vinylaromatic monomer and 0 to 15% by weight of at least one conjugated diene, and at least one polymer block B consisting of 85 to 100% by weight of at least one conjugated diene and 0 to 15% by weight of at least one vinyl aromatic monomer, wherein at least two of the blocks S are terminal blocks S1 and S2;
wherein block copolymer (A) consists of - based on the entire block copolymer (A) - 65 to 85% by weight, preferably from 68 to 80% by weight, more preferably 70 to 75% by weight, of at least one vinylaromatic monomer, in particular styrene, and
15 to 35% by weight, preferably 20 to 32%, more preferably 25 to 30% by weight, of at least one conjugated diene, in particular butadiene and/or isoprene, more preferably butadiene;
wherein the proportion of a soft phase (determined based on OsO₄ stained TEM pictures and computer processing), built essentially from polymerized conjugated diene, is from 15 to 35% by volume - based on the entire block copolymer (A), and wherein the soft phase - embedded in a hard phase (proportion 65 to 85% by volume) built essentially from polymerized vinylaromatic monomer - has a cylindrical morphology (determined by transmission electron microscopy (TEM) on OsO₄ stained ultramicrotome samples); and wherein block copolymer (A) has sharp block transitions, and has a number average molecular weight Mn of at least 140,000 g/mol;
wherein Mn of polymer block S1 is from 12,000 to 50,000 g/mol, Mn of polymer block S2 is from 40,000 to 150,000 g/mol, and Mn of polymer block B is from 15,000 to 80,000 g/mol; and
where the number average molecular weight Mn is determined by GPC according to ISO 16014-3:2012.

In the context of the invention, "sharp block transitions" means that that the transitions between the blocks of the block copolymer are sharply separated (i.e. the composition changes suddenly). Block copolymer (A) does not comprise blocks with tapered block transitions.

Preferably block copolymer (A) does not comprise random blocks.

Morphologies are determined by transmission electron microscopy (TEM) on OsO₄ stained ultramicrotome samples of SBC polymers or polymer compositions.

In the context of the invention "diene" means a conjugated diene. "Butadiene" means 1,3-butadiene. In the context of the invention a (co)polymer comprising a monomer and optionally further comonomers means a (co)polymer comprising structural units derived from said polymerized monomer(s).

In the context of the invention a polymer (block) "essentially consists of" at least one vinylaromatic monomer or at least one conjugated diene means that the polymer consists of 85 to 100% by weight of the at least one vinylaromatic monomer or 85 to 100% by weight of the at least one conjugated diene and optionally of 0 to 15% by weight of at least one conjugated diene or 0 to 15% by weight of at least one vinyl aromatic monomer, respectively.

Polymer block S of block copolymer (A) preferably consists of 90 to 100 wt.-% of at least one vinylaromatic monomer and 0 to 10 wt.-% of at least one conjugated diene; and polymer blocks B of block copolymer (A) preferably consist of 90 to 100 wt.-% of at least one conjugated diene and 0 to 10 wt.-%, of at least one vinylaromatic monomer.

In the context of the invention, the number average molecular weight Mn is determined by GPC according to ISO 16014-3:2012 (size exclusion with relative calibration method against polystyrene standards at a temperature < 60 °C).

Preferably block copolymer (A) consists of two terminal polymer blocks S1 and S2, and one polymer block B.

More preferably block copolymer (A) consists of two terminal vinylaromatic homopolymer blocks S1 and S2 and one diene homopolymer block B.

In particular preferred block copolymer (A) is a linear block copolymer (A) of the structure (I) S1-B-S2 wherein S1 and S2 are polystyrene blocks and B is a polybutadiene block.

Examples of vinylaromatic monomers which may be used for the preparation of block copolymer (A) are styrene, alpha-methylstyrene, ring-alkylated styrenes, such as p-methylstyrene or tert-butylstyrene, or a mixture of these. Preferred are styrene and/or alpha-methylstyrene, in particular preferred is styrene.

Suitable dienes which may be used for the preparation of block copolymer (A) are 1,3-butadiene, isoprene, 2,3-dimethylbutadiene, 1,3-pentadiene or 1,3-hexadiene, or a mixture of these; 1,3-butadiene and isoprene are preferred; 1,3-butadiene is particularly preferred.

Particularly preferred block copolymer (A) comprises (or consists of) styrene and butadiene.

Preferably the number average molecular weight Mn of block copolymer (A) is in the range of from 140,000 to 1,000,000 g/mol, more preferably 140,000 to 500,000 g/mol, most preferably 140,000 to 300,000 g/mol.

The number average molecular weight Mn of polymer block S1 is in the range of from 12,000 to 50,000 g/mol, preferably 15,000 to 30,000. The number average molecular weight Mn of polymer block S2 is in the range of from 40,000 to 150,000 g/mol, preferably 60,000 to 140,000 g/mol. The number average molecular weight Mn of polymer block B is in the range of from 15,000 to 80,000 g/mol, preferably 20,000 to 60,000 g/mol.

Preferred is a block copolymer (A) of the structure (I) S1-B-S2 made from 68 to 80% by weight, preferably 70 to 75% by weight, of at least one vinylaromatic monomer, in particular styrene, and 20 to 32% by weight, preferably 25 to 30% by weight, of at least one diene, in particular butadiene, having a number average molecular weight Mn in the range of from 140,000 to 500,000 g/mol.

More preferred is a block copolymer (A) of the structure (I) S1-B-S2 made from 70 to 75% by weight of at least one vinylaromatic monomer, in particular styrene, and 25 to 30% by weight, of at least one diene, in particular butadiene, having a number average molecular weight Mn in the range of from 140,000 to 300,000 g/mol.

The proportion of the soft phase - built essentially from polymerized conjugated diene - is generally from 15 to 35% by volume, preferably 18 to 32% by volume, more preferably 22 to 30% by volume - based on block copolymer (A); accordingly, the proportion of the hard phase - built essentially from vinylaromatic monomer - is from 65 to 85% by volume, more preferably 68 to 82% by volume, most preferably 70 to 78% by volume - based on block copolymer (A).

The amount of the soft phase and the hard phase is determined based on OsO₄ stained TEM pictures and computer processing calculating diene rich (and hence soft) phases (black in TEM) and vinylaromatic rich (and hence hard) phases (white in TEM).

According to the invention block copolymer (A) has sharp block transitions and the soft phase of block copolymer (A) has a cylindrical morphology.

Block copolymer (A) according to the invention may be prepared, preferably is prepared, by sequential anionic polymerization of vinylaromatic monomers and conjugated dienes with organo-alkali-metal initiator.

Sequential anionic polymerization is known per se. The anionic polymerization initiator used may be any of the conventional mono- or bifunctional alkyl, aryl, or aralkyl compounds of an alkali metal. Preferably, monolithium hydrocarbon compounds R-Li are used as initiator, where R can be an aliphatic, cycloaliphatic, or aromatic hydrocarbon moiety having from 1 to 12 C atoms. It is preferable to use n-butyllithium or sec-butyllithium, more preferably sec-butyllithium.

The amount of polymerization initiator needed depends on the desired molecular weight. It is generally in the range from around 0.01 to around 0.07 mol %, preferably 0.01 to 0.07 mol %, based on the total amount of monomer.

The polymerization is preferably undertaken in the presence of a solvent. Suitable solvents are the conventional aliphatic, cycloaliphatic, or aromatic hydrocarbons having from 4 to 12 carbon atoms and used for anionic polymerization, such as pentane, hexane, heptane, cyclohexane, methylcyclohexane, isooctane, benzene, alkylbenzenes, such as toluene, xylene, ethylbenzene, or decalin, or a suitable mixture. Preference is given to the use of cyclohexane and methylcyclohexane.

The polymerization temperature is generally from 0 to 100°C, preferably from 30 to 90°C, particularly preferably from 40 to 90°C. The polymerization reaction is generally carried out in a plurality of stages, where the initiator is added once, using a single initiation process.

The sequence of monomer addition depends on the selected block structure. In the case of a batch process, it is preferable to begin by using all of, or a portion of, the solvent, such as cyclohexane, as initial charge. Next, the vinylaromatic monomer required for the first block S1 is added. Afterwards the initial charge of initiator, such as sec-butyllithium, that is required to establish the desired molar mass, plus what is known as a titration amount, which serves to destroy traces of impurities in the solvent and in the reactor tank is added. The portion of monomers required to produce block S1 is used as initial charge in the reactor after which the polymerization reaction is initiated via addition of the initiator. In order to get sharp block transitions it is required to let the polymerization run until all monomer has reacted before adding the second monomer. This is typically observed by monitoring the reaction temperature. All monomers have reacted when the temperature starts to decrease after a temperature increase during the reaction. Then - after total consumption of the vinyl aromatic monomer - diene monomer is added and polymerized, in order to produce the block B.

Thereafter, - after total consumption of the diene monomer - the remaining amount of vinylaromatic monomer is added and polymerized, in order to produce the block S2.

Once the polymerization has ended, the living polymer chains may be capped using a chain terminator.

Suitable chain terminators are protonating substances or Lewis acids, for example water, alcohols (such as isopropanol), aliphatic or aromatic carboxylic acids, or else inorganic acids, such as carbonic acid or boric acid.

By use of a chain terminator as afore-mentioned a linear block copolymer S1-B-S2 may be obtained.

A further aspect of the invention is a polymer composition comprising block copolymer (A) as described, and further one or more optional additives and/or processing aids (B) and/or at least one optional thermoplastic polymer (C) - different from (A) and (B).

Generally the proportion of the soft phase built essentially (at least 85 wt.-%, often 85 to 100 wt.-%) from polymerized diene of the polymer composition according to the invention is from 15 to 35 wt.-%, and the soft phase - embedded in a hard phase (proportion 66 to 85 wt.-%) built essentially (at least 85 wt.-%, often 85 to 100 wt.-%) from polymerized vinylaromatic monomer - has a cylindrical morphology.

The at least one further thermoplastic polymer (C) - different from (A) and (B) - is in particular at least one vinylaromatic polymer, preferably at least one styrene polymer, e.g. standard polystyrene (GPPS).

Standard polystyrenes that are suitable as polymer (C), and their production, structure and properties, are described in detail in the review literature (A. Echte, F. Haaf, J. Hambrecht in Angew. Chem. (Int. Ed. Engl.) 20, 344-361 (1981); and also in Kunststoffhandbuch, edited by R. Vieweg and G. Daumiller, volume 4 "Polystyrol", Carl-Hanser-Verlag Munich (1996).

The blending of block copolymer (A) may take place at any desired juncture once the polymerization has ended, e.g. after termination, devolatilization, or other work-up steps.

Moreover, polymer compositions according to the invention may optionally comprise additives and/or processing aids (B). Said additives and/or processing aids may be used in amounts of 0.01 to 5% by weight based on the total polymer composition.

Suitable additives and/or processing aids are in particular stabilizers, antiblocking agents, dyes and UV absorbers. Preferred is the use of a stabilizer, in particular oxygen radical scavengers such as Irganox^{®} 1010, Songnox^{®} 1010, Irganox 1076, Irganox 565 and blends thereof, carbon radical scavengers such as Sumilizer^{®} GS, Sumilizer GM and blends thereof, and/or secondary stabilizers such as Irgafos^{®} 168. Said stabilizers are commercially available.

The afore-mentioned stabilizers are preferably used in amounts of 0.01 to 0.5 wt.-%, more preferably 0.1 to 0.3 wt.-%. Furthermore preferred is the use of an antiblocking agent such as high impact polystyrene (HIPS). Antiblocking agents are preferably used in amounts of 0.1 to 1 wt.-%.

Polymer compositions according to the invention may be prepared by compounding during the devolatilization of block copolymer (A), for example by adding polystyrene in the form of "Coldfeed" into a vented extruder. Joint work-up gives homogeneous compositions which are also capable of direct use by processors on non-mixing injection molding machinery. As an alternative, however, mixtures of pellets may also be processed directly in kneaders, extruders, or injection molding machinery which provides mixing, to give polymer compositions according to the invention.

It was found that materials based on block copolymer (A) allow the extrusion of blown and cast films with high melt strength.

A further aspect of the invention is a shaped article, in particular a film, produced from block copolymer (A) or a polymer composition according to the invention. Due to the specific structure with sharp block transitions and the specific increased total molecular weight of block copolymer (A), films produced from block copolymer (A) or a polymer composition comprising it - have good mechanical properties and show a reduced blocking (layer-to-layer stickiness when wrapped onto rolls during the production process). Moreover, it was found that - due to the cylindrical morphology and the specific total diene proportion of the soft phase - the organoleptic properties of materials based on block copolymer (A) are significantly improved.

A further aspect of the invention is the use of block copolymer (A) or a polymer composition according to the invention for the preparation of films. The invention is further illustrated by the claims and the following Examples.

### Examples

All used solvents and monomers were dried and purified prior to use.

### Test Methods

The melt mass flow index (= MFI, [ml/10 min]) was measured on a polymer melt at 220°C and 5 kg load according to ISO 1133-1:2011.

The number average molecular weight Mn was determined by GPC according to ISO 16014-3:2012 (T < 60 °C size exclusion with relative calibration method against polystyrene standards).

Organoleptic trials were made in a 100 ml Erlenmeyer flask, filled with 10 g of SBC polymer granules. Boiling water was prepared and poured directly out of the boiler into the Erlenmeyer flask. The water vapor was gently waved by hand towards the nose, and rated by a panel of at least 3 persons by following criteria:
- 0 =: completely neutral; no smell at all
- 1 =: slight indication of smell
- 2 =: smell detectable but fully acceptable
- 3 =: strong smell, still acceptable
- 4 =: very strong smell, inacceptable

Extrudability (melt strength) was rated in a "Rheotens type" test as follows: Polymer melt was heated to T = 200°C and 230°C) and poured out of the heated vessel:

| | T= 200°C | T= 230°C | Rating |
|---|---|---|---|
| Observation | viscous flow, No droplets | Viscous flow, no droplets | high extrudability |
| | Viscous flow | light flow, few/many droplets | good extrudability |
| | No/few droplets | | |
| | Light flow | light flow many droplets | poor extrudability |
| | Few/many droplets | | |

Film blocking (stickyness) was tested by casting a 1 mm film from a 220°C hot melt on a chilled roll, followed by compressing a double film layer by an external weight with 5 kg on 10 cm². After 1 day, the film was manually separated and the stickiness was rated with a value of 0 to 2 by a panel of technical experts:
- 0 =: easy separation, no stickiness
- 1 =: separation possible with slight stickiness
- 2 =: separation possible but strong stickiness, close to

The tensile properties (elongation at break) were determined according to DIN EN ISO 527-3:2019-02. Morphologies were determined by transmission electron microscopy on OsO₄ stained ultramicrotome samples of SBC polymers or their polymer compositions.

### General Preparation Method of Styrene Butadiene Block Copolymers

The tested SBC block copolymers were obtained by living anionic polymerization of styrene and butadiene in anhydrous cyclohexane under exclusion of moisture at temperatures of approximately 50 to 100 °C, using sec-Butyl lithium as initiator. Reaction times: between 2.5 and 3.5 hours.

Tapered blocks - of linear SBCs of the structure S1-B-S2 or star shaped SBCs having branches of structure S1-B-S2~ - were synthesized by simultaneous addition of styrene and butadiene, which leads to a polymerization of butadiene in first instance, followed by a tapered sequence that ends up in a short styrene sequence.

Sharp blocks - of linear SBCs of the structure S1-B-S2 or star shaped SBCs having branches of structure S1-B-S2~ - were synthesized by first addition and polymerization of styrene up to complete monomer consumption and then addition and polymerization of butadiene up to complete monomer consumption.

Then, - in case of linear SBCs - isopropanol was added as chain terminator or - in case of star shaped SBCs - epoxydized soybean oil was added as chain terminator at a ratio of 1L epoxydized soybean oil per 9.01 mol of sec-Butyl lithium initiator used.

Finally, each SBC polymer solution was acidified with CO₂/water and stabilized with 1500 ppm Irganox 1010, 1500 ppm Sumilzer GS and 1800 ppm Irgaphos 168.

The concentration of the final polymer in cyclohexane was 30 % by weight.

Each individually obtained SBC polymer solution was subsequently fed to a 25 mm twin screw extruder and the cyclohexane was degassed via vacuum and extruder domes at melt temperatures of approximately 200 °C to a residual cyclohexane content of 2000 mg per kg of polymer.

The polymer melt of each individual SBC or optionally its blend with polystyrene (PS) - a standard radically polymerized styrene with Mw 250,000 g/mol and Mn 100,000 g/mol - was extruded through a die and the strands were cut by a strand pelletizer.

For the preparation of films, films of a desired thickness were casted from a 220°C hot melt of the SBC or its blend with GPPS on chilled rolls by use of a single screw extruder.

The obtained test data are shown in Table 1. Examples C1 to C5 are comparative Examples.

**Table 1: Rating of different SBC structures**

| Exa m-ple | Structure | Morphology | Butadiene (wt.-%) | Mn (g/mol) | Stickyness | Extrudability | Organoleptics | Elongation at break (%) |
|---|---|---|---|---|---|---|---|---|
| C1 | SBC star with tapered block | lamellae | 26 | 220,000 | 2(high) | high | 3 (poor) | 250 |
| C2 | SBC star with sharp block | lamellae | 26 | 200,000 | 2(high) | high | 3 (poor) | 150 |
| C3 | SBC star with tapered block + 60 % PS | cylindrical | 26 | 220,000 | 1(low) | high | 3 (poor) | 15 |
| C4 | SBC linear with tapered block | lamellae | 27 | 82,000 | 2(high) | poor | 3 (poor) | 400 |
| C5 | SBC linear with sharp block | cylindrical | 27 | 74,000 | 1(low) | poor | 1 (good) | 30 |
| 1 | SBC linear with sharp block | cylindrical | 27 | 148,000 | 1(low) | good | 1 (good) | 50 |

The data show that a SBC block copolymer according to inventive Example 1 has an improved extrudability (melt strength) in comparison to a linear SBC block copolymer with tapered blocks (see Example C4) or a linear SBC block copolymer with sharp blocks (see Example C5), each having a low number average molecular weight Mn of 82,000 g/mol or 74,000 g/mol, respectively.

Moreover, the organoleptic properties of the SBC block copolymer according to the invention (see Example 1) are improved in comparison to a linear SBC block copolymer with tapered blocks (see Example C4). In addition - compared with the linear SBC block copolymer of Example C5 - the elongation at break is improved.

The shaped articles, in particular thin films, produced from the SBC block copolymer of the examples have advantageous properties.

## Claims

1. A linear block copolymer (A) comprising
at least two polymer blocks S of different number average molecular weight Mn consisting of 85 to 100% by weight of at least one vinylaromatic monomer and 0 to 15% by weight of at least one conjugated diene, and at least one polymer block B consisting of 85 to 100% by weight of at least one conjugated diene and 0 to 15% by weight of at least one vinyl aromatic monomer, wherein at least two of the blocks S are terminal blocks S1 and S2; wherein block copolymer (A) consists of,-based on the entire block copolymer (A):
65 to 85% by weight, preferably from 68 to 80% by weight, more preferably 70 to 75% by weight, of at least one vinylaromatic monomer, and
15 to 35% by weight, preferably 20 to 32%, more preferably 25 to 30% by weight, of at least one conjugated diene;
wherein the proportion of a soft phase (determined based on OsO₄ stained TEM pictures and computer processing), built essentially from polymerized conjugated diene, is from 15 to 35% by volume - based on the entire block copolymer (A), and wherein the soft phase - embedded in a hard phase built essentially from polymerized vinylaromatic monomer - has a cylindrical morphology (determined by transmission electron microscopy (TEM) on OsO₄ stained ultramicrotome samples);
and wherein block copolymer (A)
• has sharp block transitions; and
• has a number average molecular weight Mn of at least 140,000 g/mol;
• wherein Mn of polymer block S1 is from 12,000 to 50,000 g/mol, Mn of polymer block S2 is from 40,000 to 150,000 g/mol, and Mn of polymer block B is from 15,000 to 80,000 g/mol; and
• where the number average molecular weight Mn is determined by GPC according to ISO 16014-3:2012.

2. The block copolymer (A) according to claim 1 having a number average molecular weight Mn of block copolymer (A) in the range of from 140,000 to 1,000,000 g/mol, more preferably 140,000 to 500,000 g/mol, most preferably 140,000 to 300,000 g/mol.

3. The block copolymer (A) according to claim 1 or 2 of the structure (I) S1-B-S2.

4. The block copolymer (A) according to any of claims 1 to 3 comprising from 68 to 80% by weight, preferably 70 to 75% by weight, of at least one vinylaromatic monomer, in particular styrene, and 20 to 32%, preferably 25 to 30% by weight, of at least one conjugated diene, in particular butadiene and/or isoprene.

5. The block copolymer (A) according to any of claims 1 to 4 wherein the vinylaromatic monomer is styrene and the conjugated diene is butadiene.

6. The block copolymer (A) according to any of claims 1 to 5 wherein the proportion of a soft phase, built essentially from polymerized conjugated diene, is from 18 to 32% by volume.

7. The block copolymer (A) according to any of claims 1 to 6 wherein the proportion of a soft phase, built essentially from polymerized conjugated diene, is from 22 to 30% by volume.

8. A process for the preparation of a block copolymer (A) according to any of claims 1 to 7 by sequential anionic polymerization of the monomers.

9. A polymer composition comprising at least one block copolymer (A) according to any of claims 1 to 7 and further one or more optional additives and/or processing aids (B) and/or at least one thermoplastic polymer (C) - different from (A) and (B).

10. The polymer composition according to claim 9 wherein the thermoplastic polymer (C) is polystyrene.

11. The polymer composition according to claim 9 or 10 wherein the proportion of the soft phase formed from polymerized diene, based on the entire polymer composition, is from 15 to 35 wt.-%, and the soft phase - embedded in a hard phase formed from polymerized vinylaromatic monomer - has a cylindrical morphology.

12. The polymer composition according to claim 11 wherein the proportion of the soft phase formed from polymerized diene, based on the entire polymer composition, is from 18 to 32 wt.-%, preferably 22 to 30 wt.-%.

13. A shaped article, in particular a film, produced from block copolymer (A) according to any of claims 1 to 7, or a polymer composition according to any of claims 9 to 12.

14. Use of block copolymer (A) according to any of claims 1 to 7, or of a polymer composition according to any of claims 9 to 12 for the preparation of films.

## Patentansprüche

1. Lineares Blockcopolymer (A), umfassend
mindestens zwei Polymerblöcke S mit unterschiedlichem zahlenmittleren Molekulargewicht Mn, bestehend aus 85 bis 100 Gew.-% mindestens eines vinylaromatischen Monomers und 0 bis 15 Gew.-% mindestens eines konjugierten Diens, und mindestens einen Polymerblock B, bestehend aus 85 bis 100 Gew.-% mindestens eines konjugierten Diens und 0 bis 15 Gew.-% mindestens eines vinylaromatischen Monomers, wobei mindestens zwei der Blöcke S endständige Blöcke S1 und S2 sind; wobei das Blockcopolymer (A) besteht aus, -bezogen auf das gesamte Blockcopolymer (A):
65 bis 85 Gew.-%, bevorzugt 68 bis 80 Gew.-%, besonders bevorzugt 70 bis 75 Gew.-%, mindestens eines vinylaromatischen Monomers, und
15 bis 35 Gew.-%, bevorzugt 20 bis 32 Gew.-%, besonders bevorzugt 25 bis 30 Gew.-%, mindestens eines konjugierten Diens;
wobei der Anteil einer weichen Phase (bestimmt auf der Grundlage von OsO₄-gefärbten TEM-Bildern und Computerverarbeitung), die im Wesentlichen aus polymerisiertem konjugiertem Dien aufgebaut ist, 15 bis 35 Vol.-% - bezogen auf das gesamte Blockcopolymer (A) - beträgt, und wobei die weiche Phase - eingebettet in eine harte Phase, die im Wesentlichen aus polymerisiertem vinylaromatischem Monomer aufgebaut ist - eine zylindrische Morphologie aufweist (bestimmt durch Transmissionselektronenmikroskopie (TEM) an OsO₄-gefärbten Ultramikrotom-Proben);
und wobei das Blockcopolymer (A)
• scharfe Blockübergänge aufweist; und
• ein zahlenmittleres Molekulargewicht Mn von mindestens 140.000 g/mol aufweist;
• wobei Mn des Polymerblocks S1 von 12.000 bis 50.000 g/mol, Mn des Polymerblocks S2 von 40.000 bis 150.000 g/mol und Mn des Polymerblocks B von 15.000 bis 80.000 g/mol beträgt; und
• wobei das zahlenmittlere Molekulargewicht Mn durch GPC gemäß ISO 16014-3:2012 bestimmt wird.

2. Blockcopolymer (A) nach Anspruch 1 mit einem zahlenmittleren Molekulargewicht Mn des Blockcopolymers (A) im Bereich von 140.000 bis 1.000.000 g/mol, mehr bevorzugt 140.000 bis 500.000 g/mol, am meisten bevorzugt 140.000 bis 300.000 g/mol.

3. Blockcopolymer (A) nach Anspruch 1 oder 2 mit der Struktur (I) S1-B-S2.

4. Blockcopolymer (A) nach einem der Ansprüche 1 bis 3, umfassend 68 bis 80 Gew.-%, bevorzugt 70 bis 75 Gew.-%, mindestens eines vinylaromatischen Monomers, insbesondere Styrol, und 20 bis 32 Gew.-%, bevorzugt 25 bis 30 Gew.-%, mindestens eines konjugierten Diens, insbesondere Butadien und/oder Isopren.

5. Blockcopolymer (A) nach einem der Ansprüche 1 bis 4, wobei das vinylaromatische Monomer Styrol ist und das konjugierte Dien Butadien ist.

6. Blockcopolymer (A) nach einem der Ansprüche 1 bis 5, wobei der Anteil einer weichen Phase, die im wesentlichen aus polymerisiertem konjugiertem Dien aufgebaut ist, 18 bis 32 Vol.-% beträgt.

7. Blockcopolymer (A) nach einem der Ansprüche 1 bis 6, wobei der Anteil einer weichen Phase, die im wesentlichen aus polymerisiertem konjugiertem Dien aufgebaut ist, 22 bis 30 Vol.-% beträgt.

8. Verfahren zur Herstellung eines Blockcopolymers (A) nach einem der Ansprüche 1 bis 7 durch sequenzielle anionische Polymerisation der Monomere.

9. Polymerzusammensetzung, umfassend mindestens ein Blockcopolymer (A) nach einem der Ansprüche 1 bis 7 und ferner ein oder mehrere optionale Additive und/oder Verarbeitungshilfsmittel (B) und/oder mindestens ein thermoplastisches Polymer (C) - verschieden von (A) und (B).

10. Polymerzusammensetzung nach Anspruch 9, wobei das thermoplastische Polymer (C) Polystyrol ist.

11. Polymerzusammensetzung nach Anspruch 9 oder 10, wobei der Anteil der aus polymerisiertem Dien gebildeten weichen Phase, bezogen auf die gesamte Polymerzusammensetzung, 15 bis 35 Gew.-% beträgt und die weiche Phase - eingebettet in eine aus polymerisiertem vinylaromatischem Monomer gebildete harte Phase - eine zylindrische Morphologie aufweist.

12. Polymerzusammensetzung nach Anspruch 11, wobei der Anteil der aus polymerisiertem Dien gebildeten weichen Phase, bezogen auf die gesamte Polymerzusammensetzung, 18 bis 32 Gew.-%, bevorzugt 22 bis 30 Gew.-%, beträgt.

13. Formkörper, insbesondere Folie, hergestellt aus Blockcopolymer (A) nach einem der Ansprüche 1 bis 7 oder einer Polymerzusammensetzung nach einem der Ansprüche 9 bis 12.

14. Verwendung von Blockcopolymer (A) nach einem der Ansprüche 1 bis 7 oder einer Polymerzusammensetzung nach einem der Ansprüche 9 bis 12 zur Herstellung von Folien.

## Revendications

1. Copolymère à blocs linéaire (A) comprenant
au moins deux blocs polymères S de masses moléculaires moyennes en nombre Mn différentes, constitués de 85 à 100% en poids d'au moins un monomère vinylaromatique et de 0 à 15% en poids d'au moins un diène conjugué, et au moins un bloc polymère B constitué de 85 à 100% en poids d'au moins un diène conjugué et de 0 à 15% en poids d'au moins un monomère vinylaromatique, dans lequel au moins deux des blocs S sont des blocs terminaux S1 et S2 ; le copolymère à blocs (A) etant constitué, - sur la base du copolymère à blocs (A) entier :
65 à 85 % en poids, de préférence 68 à 80 % en poids, plus de préférence 70 à 75 % en poids, d'au moins un monomère vinylaromatique, et
15 à 35 % en poids, de préférence 20 à 32 %, plus de préférence 25 à 30 % en poids, d'au moins un diène conjugué ;
dans lequel la proportion d'une phase molle (déterminée sur la base d'images TEM colorées à l'OsO₄ et d'un traitement informatique), constituée essentiellement de diène conjugué polymérisé, est de 15 à 35 % en volume - sur la base du copolymère à blocs (A) entier, et dans lequel la phase molle - intégrée dans une phase dure constituée essentiellement de monomère vinylaromatique polymérisé - présente une morphologie cylindrique (déterminée par microscopie électronique à transmission (TEM) sur des échantillons ultramicrotomiques colorés à l'OsO₄) ;
et dans lequel le copolymère à blocs (A)
• présente des transitions de bloc nettes ; et
• a une masse moléculaire moyenne en nombre Mn d'au moins 140 000 g/mol ;
• dans lequel le Mn du bloc polymère S1 est compris entre 12 000 et 50 000 g/mol, le Mn du bloc polymère S2 est compris entre 40 000 et 150 000 g/mol, et le Mn du bloc polymère B est compris entre 15 000 et 80 000 g/mol ; et
• où la masse moléculaire moyenne en nombre Mn est déterminée par GPC conformément à la norme ISO 16014-3:2012.

2. Le copolymère à blocs (A) selon la revendication 1 ayant une masse moléculaire moyenne en nombre Mn du copolymère à blocs (A) comprise entre 140 000 et 1 000 000 g/mol, de préférence entre 140 000 et 500 000 g/mol, plus de préférence entre 140 000 et 300 000 g/mol.

3. Copolymère à blocs (A) selon la revendication 1 ou 2 de structure (I) S1-B-S2.

4. Copolymère à blocs (A) selon l'une quelconque des revendications 1 à 3 comprenant de 68 à 80% en poids, de préférence de 70 à 75% en poids, d'au moins un monomère vinylaromatique, en particulier le styrène, et de 20 à 32%, de préférence de 25 à 30% en poids, d'au moins un diène conjugué, en particulier le butadiène et/ou l'isoprène.

5. Copolymère à blocs (A) selon l'une quelconque des revendications 1 à 4, dans lequel le monomère vinylaromatique est le styrène et le diène conjugué est le butadiène.

6. Copolymère à blocs (A) selon l'une quelconque des revendications 1 à 5, dans lequel la proportion d'une phase molle, constituée essentiellement de diène conjugué polymérisé, est de 18 à 32% en volume.

7. Le copolymère à blocs (A) selon l'une quelconque des revendications 1 à 6, dans lequel la proportion d'une phase molle, constituée essentiellement de diène conjugué polymérisé, est de 22 à 30 % en volume.

8. Procédé de préparation d'un copolymère à blocs (A) selon l'une quelconque des revendications 1 à 7 par polymérisation anionique séquentielle des monomères.

9. Composition polymère comprenant au moins un copolymère à blocs (A) selon l'une quelconque des revendications 1 à 7 et en outre un ou plusieurs additifs facultatifs et/ou auxiliaires de fabrication (B) et/ou au moins un polymère thermoplastique (C) - différent de (A) et (B).

10. Composition polymère selon la revendication 9, dans laquelle le polymère thermoplastique (C) est le polystyrène.

11. Composition polymère selon la revendication 9 ou 10, dans laquelle la proportion de la phase molle formée de diène polymérisé, sur la base de la composition polymère entière, est de 15 à 35 % en poids, et la phase molle - noyée dans une phase dure formée de monomère vinylaromatique polymérisé - a une morphologie cylindrique.

12. Composition polymère selon la revendication 11, dans laquelle la proportion de la phase molle formée de diène polymérisé, sur la base de la composition polymère entière, est de 18 à 32 % en poids, de préférence de 22 à 30 % en poids.

13. Article façonné, en particulier film, produit à partir d'un copolymère à blocs (A) selon l'une quelconque des revendications 1 à 7, ou d'une composition polymère selon l'une quelconque des revendications 9 à 12.

14. Utilisation du copolymère à blocs (A) selon l'une quelconque des revendications 1 à 7, ou d'une composition polymère selon l'une quelconque des revendications 9 à 12 pour la préparation de films.
